(19) Europäisches Patentamt
European Patent Office
Office européen des brevets

(11) **EP 2 725 382 B1**

(12) **EUROPÄISCHE PATENTSCHRIFT**

(45) Veröffentlichungstag und Bekanntmachung des Hinweises auf die Patenterteilung:
**18.01.2017 Patentblatt 2017/03**

(51) Int Cl.:
*G01S 13/90* (2006.01)    *H01Q 3/26* (2006.01)

(21) Anmeldenummer: **13005036.2**

(22) Anmeldetag: **22.10.2013**

(54) **Synthetisches Apertur Radar zur gleichzeitigen Bildaufnahme und Bewegtzielerkennung**

Synthetic aperture radar for simultaneous imaging and moving target detection

Radar à ouverture synthétique pour la prise de vue et la détection de cible mobile simultanées

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2012 DE 102012021010**

(43) Veröffentlichungstag der Anmeldung:
**30.04.2014 Patentblatt 2014/18**

(73) Patentinhaber:
• **Astrium GmbH**
**82024 Taufkirchen (DE)**
• **Deutsches Zentrum für Luft- und Raumfahrt e.V.**
**51147 Köln (DE)**

(72) Erfinder:
• **Schäfer, Christoph, Dr.**
**88048 Friedrichshafen (DE)**
• **Baumgartner, Stefan**
**82256 Fürstenfeldbruck (DE)**

(74) Vertreter: **Schicker, Silvia**
**Wuesthoff & Wuesthoff**
**Patentanwälte PartG mbB**
**Schweigerstraße 2**
**81541 München (DE)**

(56) Entgegenhaltungen:
**DE-A1-102006 022 814    US-A- 5 818 383**

• **S BAUMGARTNER ET AL: "Digital Beamforming and Traffic Monitoring Using the new F-SAR System of DLR", PROCEEDINGS INTERNATIONAL RADAR SYMPOSIUM, 7. September 2007 (2007-09-07), XP055098507,**
• **GABELE M ET AL: "GMTI Performance of a High Resolution Wide Swath SAR Operation Mode", GEOSCIENCE AND REMOTE SENSING SYMPOSIUM, 2008. IGARSS 2008. IEEE INTERNATIONAL, IEEE, PISCATAWAY, NJ, USA, 7. Juli 2008 (2008-07-07), Seiten III-282, XP031422489, ISBN: 978-1-4244-2807-6**
• **XINWEI WU ET AL: "A novel spectrum reconstruction algorithm for high resolution and wide swath space-borne SAR", 2007 1ST ASIAN AND PACIFIC CONFERENCE ON SYNTHETIC APERTURE RADAR, 1. November 2007 (2007-11-01), Seiten 709-712, XP055098331, DOI: 10.1109/APSAR.2007.4418711 ISBN: 978-1-42-441188-7**
• **LONG SUN ET AL: "MIMO SAR/MTI system design and signal analysis for moving target indiction", RADAR (RADAR), 2011 IEEE CIE INTERNATIONAL CONFERENCE ON, IEEE, 24. Oktober 2011 (2011-10-24), Seiten 116-121, XP032123809, DOI: 10.1109/CIE-RADAR.2011.6159489 ISBN: 978-1-4244-8444-7**
• **LIU GUANGYAN ET AL: "Unambiguous reconstruction and imaging of nonuniform sampling SAR signals", 2007 1ST ASIAN AND PACIFIC CONFERENCE ON SYNTHETIC APERTURE RADAR, 1. November 2007 (2007-11-01), Seiten 253-256, XP055098329, DOI: 10.1109/APSAR.2007.4418602 ISBN: 978-1-42-441187-0**

**Beschreibung**

Die Erfindung betrifft ein Synthetisches Apertur Radar (SAR), welches gleichzeitig als konventionelles SAR zur Bildaufnahme und als interferometrisches SAR zur Bewegtzielerkennung (sog. GMTI-SAR) betrieben werden kann.

Ein Synthetisches Apertur Radar (SAR) tastet ein Objekt wie beispielsweise die Erdoberfläche mittels einer bewegten Antenne ab, über die Impulssignale, d.h. Impulse in einem definierten Zeitabstand ausgesandt und die Echosignale, also die an abgetasteten Objekten reflektierten Impulssignale empfangen werden. Die Bewegungsrichtung der Antenne wird auch als Azimut oder along track bezeichnet. Für jeden von der Antenne ausgeleuchteten und abgetasteten Bereich wird von einem SAR-Prozessor durch entsprechende Datenverarbeitung der Echosignale eine Abbildung des abgetasteten Objekts berechnet. Ein SAR wird beispielsweise zur Vermessung und Abbildung der Erdoberfläche mittels Satelliten eingesetzt, also zur Bildaufnahme. Ein SAR kann auch zur Erkennung von Bewegtzielen eingesetzt werden. Ein zu diesem Zweck betriebenes SAR wird als GMTI (Ground Moving Target Indicator)-SAR bezeichnet. Die Begriffe SAR, SAR-Instrument, SAR-Sensor, SAR-Plattform werden hierin als Synonyme verwendet.

Nachfolgend wird das Prinzip der Geometrie und Frequenz-Richtungs-Kopplung bei einem GMTI-SAR erläutert.

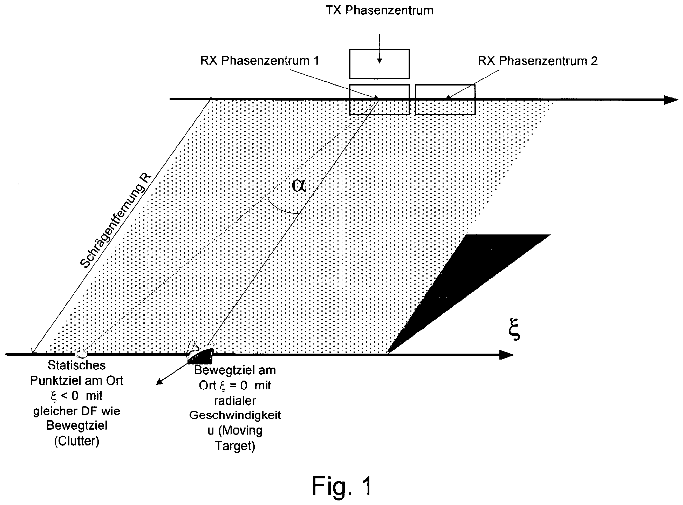

Fig. 1 zeigt die prinzipielle Geometrie eines GMTI-SAR-Instrumentes, mit der Flugbahn des Instrumentes, einem Bewegtziel am Boden und demjenigen Punktziel am Boden, das im dargestellten Moment beim GMTI-SAR-Instrument empfangsseitig dieselbe Dopplerfrequenz verursacht wie das Bewegtziel mit dessen radialer Geschwindigkeit.

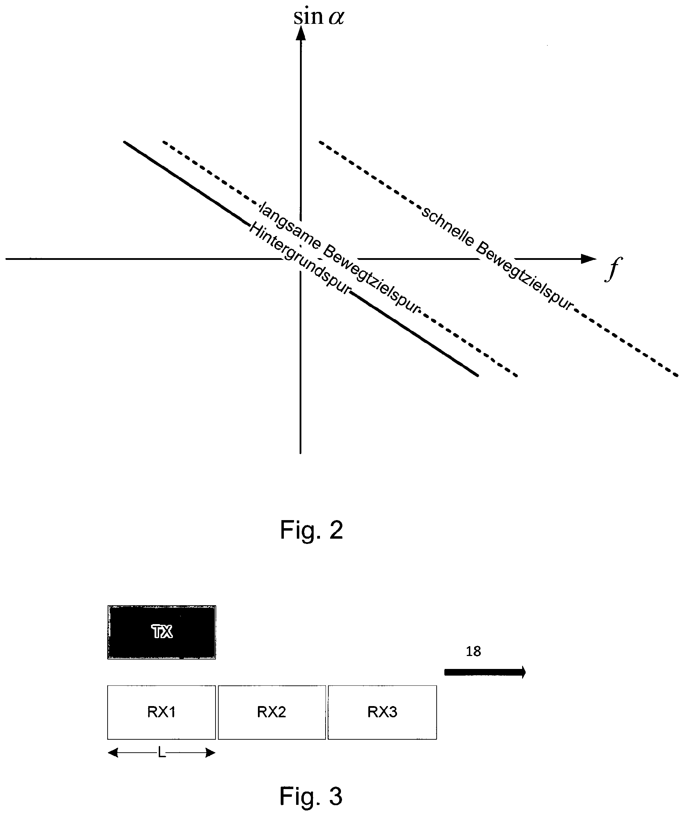

Fig. 2 zeigt ein Diagramm zur Frequenz-Richtungs-Kopplung, das als Ordinate die Dopplerfrequenz f und als Abszisse den Sinus der azimutalen Blickrichtung $\alpha$ vom fliegenden Instrument auf den Boden besitzt. Die dargestellte durchgezogene Linie zeigt die Spur aller statischen Punktziele (sog. Hintergrund = clutter) an, wie sie im Vorbeiflug des Instruments gezogen wird. Je nach azimutaler Richtung eines betrachteten Punktzieles wird dieses Ziel im SAR Betrieb zur Bildaufnahme in einer Empfangsantenne ein Signal mit eindeutig zugeordneter Dopplerfrequenz verursachen.

Die gestrichelte Linie zeigt im Gegensatz dazu die entsprechende Spur eines am Boden befindlichen Bewegtziels, das sich mit konstanter Geschwindigkeit in radialer Richtung bewegt. $u$ bezeichnet die Projektion dieser konstanten Geschwindigkeit in die Schrägentfernungsebene. Je kleiner $u$, desto näher verläuft die gestrichelte Linie an der durchgezogenen; für $u = 0$ würde sie zusammenfallen, das Bewegtziel wäre ein statisches Ziel.

Eine Hauptaufgabe der Signalverarbeitung, die am Boden durchgeführt wird, ist die Trennung dieser beiden Kurven für $|u| > 0$ (sog. Hintergrundsunterdrückung = clutter suppression). Die kleinste Geschwindigkeit, mit der ein gegebenes Bewegtziel noch vom statischen Hintergrund zu trennen ist, stellt ein wesentliches Performancemerkmal eines GMTI-SAR dar (sog. Minimum Detectable Velocity = MDV).

Nachfolgend werden der Stand der Technik beim GMTI-SAR und die dabei auftretende Problematik erläutert.

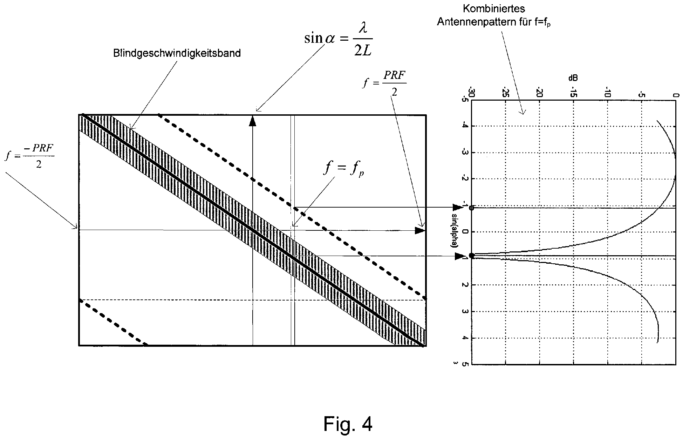

Eine konventionelle GMTI-SAR Antennenarchitektur ist in Fig. 3 schematisch dargestellt. Diese besteht aus einer sendenden Apertur TX und drei in Flugrichtung 18 angeordneten, empfangenden Subaperturen RX1, RX2, RX3, alle mit der Länge $L$ in Flugrichtung 18. In Fig. 4 ist das entsprechende Frequenz-Zeit-Kopplungsdiagramm für diese Architektur schematisch dargestellt. Die Signale aller Subaperturen RX1-RX3 werden im Flug aufgezeichnet und am Boden prozessiert.

Im Folgenden wird eine prinzipielle Methode der Prozessierung vereinfacht dargestellt. Die Signale der Subaperturen RX1 und RX2 werden nach geeigneter Vorprozessierung mittels eines frequenzabhängigen Digitalfilters so miteinander kombiniert, dass das Paar von Aperturen z.B. das Antennenpattern der Empfangsantenne ausbildet. Dieses Pattern ist dazu optimiert, das Hintergrundssignal maximal zu unterdrücken und das Bewegtzielsignal maximal zu verstärken. Dieser Vorgang wird mit dem Signalpaar der Subaperturen RX2 und RX3 wiederholt, so dass ebenfalls nur das Bewegtzielsignal übrig bleibt. Der Vergleich der beiden derart gefilterten Signale führt zu einer Phaseninformation, aus der die in der Zeit $\Delta t$ eingetretene radiale Schrägentfernungsänderung $\Delta R$ und damit die radiale Geschwindigkeit des

Bewegtziels $u = \dfrac{\Delta R}{\Delta t}$ ermittelt werden kann. $\Delta t$ ist diejenige Zeit, die verstreicht zwischen dem Vorbeiflug des aus RX1+RX2 kombinierten Phasenzentrums und des aus RX2+RX3 kombinierten Phasenzentrums am Bewegtziel:

$\Delta t = \dfrac{L}{2v}$. $v$ ist die Geschwindigkeit der GMTI-SAR-Plattform, und der Faktor 2 ist der bistatischen Natur des Antennensystems geschuldet.

Folgende Probleme treten bei diesem System auf.

1. Die Trennung von Hintergrunds- und Bewegtzielsignal durch Strahlformung mit zwei Phasenzentren führt zu Verlusten bei letzterem. Diese Verluste werden umso größer, je kleiner die Bewegtzielgeschwindigkeit ist, d.h. je näher die Bewegtzielspur im Frequenz-Zeit-Kopplungsdiagramm an die Hintergrundsspur heranrückt. Es ergibt sich ein sog. Blindgeschwindigkeitsband, wie in Fig. 4 gezeigt, innerhalb dessen sich das gewünschte Bewegtzielsignal nur unzureichend abhebt vom unerwünschten Hintergrundsignal. Die Breite des Blindgeschwindigkeitsbands bestimmt die kleinste noch messbare Geschwindigkeit des Bewegtziels MDV. Die Breite muss bei einer vorteilhaften Auslegung möglichst klein sein.

2. Die Verzögerung $\Delta t$ und somit die Länge $L$ der Subaperturen bestimmt den größten eindeutig bestimmbaren Geschwindigkeitsbereich des Bewegtziels. Dieser kann bei langen Subaperturen für manche Anwendungen zu klein sein.

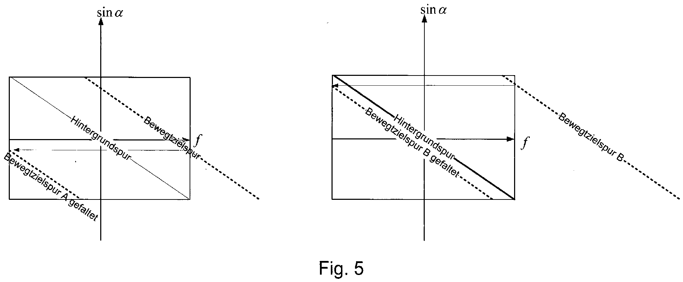

3. Die Pulswiederholfrequenz muss größer als für das zugrundeliegende SAR Instrument gewählt werden, damit sich das Bewegtzielsignal nicht faltet und erneut, von der anderen Seite in das Blindgeschwindigkeitsband eindringt, wie es die Diagramme von Fig. 5 zeigen. Eine erhöhte PRF (Pulse Repetition Frequency) führt aber zu einer in der Regel unerwünschten Verschmälerung der maximal zu erfassenden Bodenstreifenbreite und damit zu Inkompatibilitäten mit einem gleichzeitigen SAR Mode des Instruments.

Um der Einschränkung nach 1) zu begegnen, werden in der Literatur Systeme mit folgenden Modifikationen vorgeschlagen.

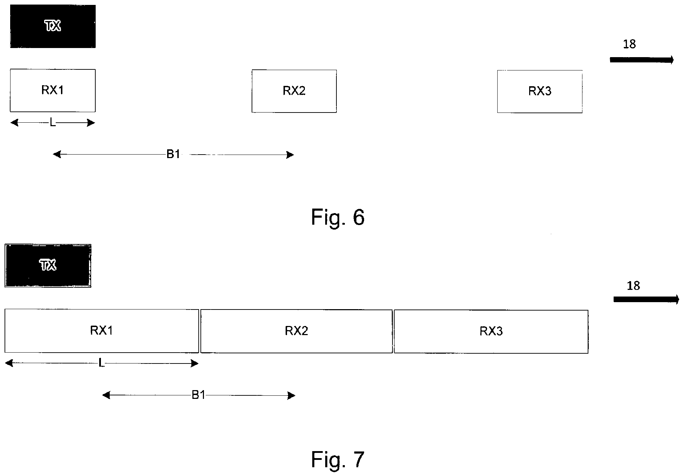

A): Die Subaperturen RX1-RX3 werden in Flugrichtung 18 auseinandergezogen, so dass die Phasenzentren der benachbarten Subaperturen einen Abstand B1 aufweisen, wie es in Fig. 6 dargestellt ist. Dies führt zu einer Verschmälerung des zentralen Blindgeschwindigkeitsbandes. Als Nachteil hiervon ergeben sich jedoch zusätzliche (ebenso schmale) Blindgeschwindigkeitsbänder bei höheren Geschwindigkeiten.

B): Um den Nachteil nach A) zu vermeiden, kann die entstandene Lücke durch zusätzliche Subaperturen gleicher Länge aufgefüllt werden. Auf diese Weise wird das zentrale Blindgeschwindigkeitsband verschmälert ohne dass zusätzliche, periodische Blindgeschwindigkeitsbänder auftreten.
Andere Verbesserungen von A) gelingen durch partielles Auffüllen der Lücke mit einzelnen Subaperturen und mit optimierten Abständen, wobei aber Lücken bleiben.

C): Die Verwendung von längeren Subaperturen RX1-RX3 ohne Lücken - wie in Fig. 7 gezeigt - führt ebenfalls zur Verschmälerung des zentralen Blindgeschwindigkeitsbandes ohne das Entstehen neuer Blindgeschwindigkeitsbänder. Dabei verkleinert sich aber auch der eindeutig bestimmbare Geschwindigkeitsbereich des Bewegtziels wegen der Verlängerung der Abstandslinie B1 zwischen den Zentren benachbarter Subaperturen.

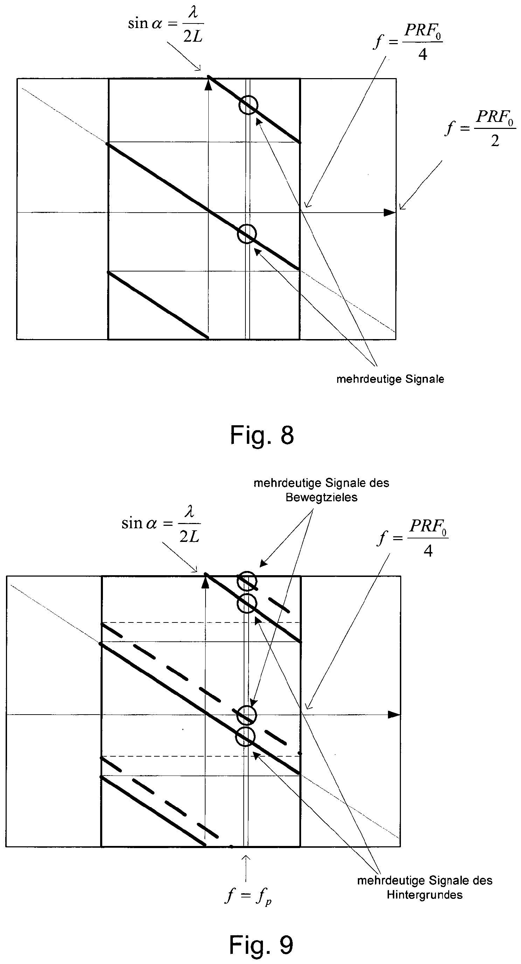

Die Pulswiederholfrequenz wird bei konventionellen Architekturen so gewählt, dass die Spur des schnellsten Bewegtziels ungefaltet bleibt. Andernfalls wird sie gefaltet wie es z.B. in Fig. 5 dargestellt ist. Durch die Faltung geht ein Teil der Signalenergie verloren, wenn nicht ein Rekonstruktionsverfahren angewandt wird.
Im Folgenden wird der Stand der Technik bei SAR Systemen mit erniedrigter Pulswiederholfrequenz, sogenannten HRWS (High Resolution Wide Swath)-SAR-Systemen beschrieben, die zur Bildaufnahme eingesetzt werden.
Für SAR Instrumente ohne Bewegtzielerkennung gibt es folgendes Verfahren zur Erniedrigung der PRF (siehe auch die europäische Patentschrift EP 1 241 487 B1). Es werden wie beim konventionellen GMTI-SAR $N > 1$ Subaperturen in Azimut vorgesehen, und deren Empfangssignale werden separat aufgezeichnet. Die PRF kann dann um etwa den Faktor $N$ reduziert werden. Die dadurch eintretende Faltung des Empfangssignals ist in Fig. 8 für $N = 2$ illustriert.
Für jede Dopplerfrequenz gibt es N Punktziele in Azimut, deren Signale sich mehrdeutig überlagern. Die N Subaperturantennendiagramme können aber beim Prozessieren so durch Strahlformung im Frequenzbereich kombiniert werden (d.h. die N Signale können beim Prozessieren so mittels eines digitalen Filters gefiltert werden), dass je nach Wahl der Gewichte des Digitalfilters alle bis auf eine dieser Punktzielantworten unterdrückt werden. Auf diese Weise sind eine Trennung der Signale und damit anschließend eine Rekonstruktion des gesamten Azimutspektrums eines festen Punktziels möglich.
In Fig. 9 ist die Frequenz-Zeit Kopplung bei zusätzlichem Vorhandensein eines Bewegtziels und erniedrigter Pulswiederholfrequenz illustriert (im Beispiel um den Faktor 2). Die Signalspuren sowohl der statischen Ziele als auch des Bewegtziels werden gefaltet.
Ein wesentlicher Unterschied zwischen den beiden Instrumentfunktionen "SAR zur Bildaufnahme" und "SAR zur Bewegtzielerkennung" besteht in den Anforderungen an die Dopplerbandbreite der Empfangssignale, die vom Radarinstrument verarbeitet werden müssen und die bei der zweiten Funktion deutlich höher sind als bei der ersten. Bisher hat dieser Unterschied zur Verwendung unterschiedlicher Pulswiederholraten (PRF) geführt und die Definition eines gemeinsamen Radarmodes, der nicht zu Einschränkungen bei mindestens einem der beiden Moden führte, verhindert.
Die Veröffentlichung "MIMO SAR/MTI system design and signal analysis for moving target indiction", LONG SUN ET AL, RADAR (RADAR), 2011 IEEE CIE INTERNATIONAL CONFERENCE ON, IEEE, 24. Oktober 2011 (2011-10-24), Seiten 116-121, XP032123809, DOI: 10.1109/CIE-RADAR.2011.6159489 ISBN: 978-1-4244-8444-7, beschreibt das Design eines MIMO (Multiple-Input Multiple-Output) SAR-Systems und eine Signalanalyse des SAR-Systems für die Bewegtzielerkennung.

Die Veröffentlichung "Digital Beamforming and Traffic Monitoring Using the new F-SAR System of DLR", S BAUMGARTNER ET AL, PROCEEDINGS INTERNATIONAL RADAR SYMPOSIUM, 7. September 2007 (2007-09-07), XP055098507, beschreibt vorläufige Ergebnisse auf dem Gebiet der Bewegtzielerkennung und der digitalen Strahlformung unter Benutzung experimenteller Daten des F-SAR-Systems des Deutschen Zentrums für Luft- und Raumfahrt DLR.

Die Veröffentlichung "GMTI Performance of a High Resolution Wide Swath SAR Operation Mode", GABELE M ET AL, GEOSCIENCE AND REMOTE SENSING SYMPOSIUM, 2008. IGARSS 2008. IEEE INTERNATIONAL, IEEE, PISCATAWAY, NJ, USA, 7. Juli 2008 (2008-07-07), Seiten III-282, XP031422489, ISBN: 978-1-4244-2807-6, beschreibt einen Betriebsmodus für ein SAR zur Bewegtzielerkennung, das ein rechteckiges Antennen-Array aufweist und Subpulse Beamsteering in Senderichtung einsetzt, um eine breite Streifenabdeckung zu erzielen.

Die Veröffentlichung "A novel spectrum reconstruction algorithm for high resolution and wide swath spaceborne SAR", XINWEI WU ET AL, 2007 1ST ASIAN AND PACIFIC CONFERENCE ON SYNTHETIC APERTURE RADAR, 1. November 2007 (2007-11-01), Seiten 709-712, XP055098331, DOI: 10.1109/APSAR.2007.4418711 ISBN: 978-1-42-441188-7, beschreibt einen Spektrums-Rekonstruktions-Aloprithmus für ein HRWS (High Resolution Wide Swath)-SAR.

Eine der vorliegenden Erfindung zugrunde liegende Aufgabe besteht darin, ein SAR zu schaffen, welches gleichzeitig als konventionelles SAR zur Bildaufnahme und als interferometrisches SAR zur Bewegtzielerkennung betrieben werden kann.

Diese Aufgabe wird durch ein SAR mit den Merkmalen von Anspruch 1 gelöst. Weitere Ausgestaltungen der Erfindung sind Gegenstand der abhängigen Ansprüche.

Erfindungsgemäß wird diese Aufgabe durch die Verwendung eines Antennensystems, das empfangsseitig eine Reihe von Subaperturen mit jeweils separater Empfangssignalaufzeichnung aufweist, und mit Hilfe geeigneter Signalverarbeitung, insbesondere mit Hilfe von geeigneten Signalverarbeitungsmethoden gelöst, die auf die aufgezeichneten SAR Rohdaten, d.h. die empfangenen und für jede Subapertur separat aufgezeichneten reflektierten Signale, anzuwenden sind, insbesondere bei einer Prozessierung am Boden. Die geeignete Signalverarbeitung implementiert zwei Betriebsmodi des erfindungsgemäßen SAR: einen herkömmlichen SAR-Betriebsmodus zur Bildaufnahme und einen Modus zur Bewegtzielerkennung. Dadurch erlaubt es die Erfindung, insbesondere zugleich

- eine niedrige PRF und damit einen breiten erfassten Bodenstreifen,

- einen hohen eindeutigen Geschwindigkeitsmessbereich des Bewegtziels,

- eine niedrige Mindestgeschwindigkeit zur Erkennung des Bewegtziels und

- eine hohe Azimutauflösung des SAR-Betriebsmodes

zu erreichen, sofern eine entsprechende Anzahl von empfangsseitigen Subaperturen des Antennensystems des erfindungsgemäßen SAR bereitgestellt wird. Mit andren Worten kann ein erfindungsgemäßes SAR aufgrund der Antennenkonfiguration mit mehreren Subaperturen und gesonderter Empfangssignalaufzeichnung der Subaperturen gleichzeitig in einem Bildaufnahme- und einem Bewegtzielerkennungs-Modus betrieben werden, wobei der Modus erst durch die Signalverarbeitung bzw. -prozessierung unterschieden wird. Hierdurch können auch die für den Bewegtzielerkennungs-Modus bei niedriger PRF erforderlichen zusätzlichen Subaperturen im Bildaufnahme-Modus zur Erhöhung der Empfindlichkeit des SAR-Instruments genutzt werden.

Eine Ausführungsform der Erfindung betrifft nun ein synthetisches Apertur Radar (SAR) zur gleichzeitigen Bildaufnahme und Bewegtzielerkennung mit einer Antennenkonfiguration, die mindestens eine aus mehreren in Flugrichtung hintereinander angeordneten Subaperturen gebildete Linearantenne zum Empfangen von reflektierten Signalen aufweist, Bildaufnahme-Mitteln, die zum Erzeugen von SAR-Bildern durch eine SAR/HRWS-Prozessierung der gesondert aufgezeichneten Empfangsignale der einzelnen Subaperturen ausgebildet sind, und Bewegtzielerkennungs-Mitteln, die zum Schätzen der Geschwindigkeit eines Bewegtziels durch Transformation der gesondert aufgezeichneten Empfangsignale der einzelnen Subaperturen in den Azimutfrequenzbereich, Filterung der transformierten Empfangsignale zur Signalselektion und Korrelation der selektierten Signale zur Fokussierung auf ein Bewegtziel ausgebildet sind. Durch die spezielle Antennenkonfiguration, die Prozessierung der separat für jede Subapertur aufgezeichneten Empfangsignale durch die Bildaufnahme-Mittel und die Bewegtzielerkennungs-Mittel können mit einem derartigen SAR sowohl SAR-Bilder aufgenommen als auch Bewegtziele erkannt werden, ohne wesentliche Einschränkung bei der Bildaufnahme und der Bewegtzielerkennung.

In einer Ausführungsform des SAR kann vorgesehen sein, dass mehrere Linearantennen einer Antennenkonfiguration in Flugrichtung zueinander versetzt angeordnet sind. Der Versatz der Linearantennen erlaubt die Einstellung eines eindeutigen Geschwindigkeitsmessbereichs eines zu erkennenden Bewegtziels, insbesondere beliebig und unabhängig von der Länge der Subaperturen in Flugrichtung.

In einer speziellen Ausführungsform kann die Antennenkonfiguration genau zwei aus jeweils vier in Flugrichtung hintereinander angeordneten Subaperturen gebildete Linearantennen aufweisen, die in Flugrichtung zueinander versetzt angeordnet sind, wobei jeweils zwei Subaperturen jeder Linearantenne in einem HRWS-Modus des synthetischen Apertur Radars betrieben werden. Durch den Betrieb von jeweils zwei Subaperturen im HRWS-Modus kann die Streifenbreite bei dieser Antennenkonfiguration nahezu verdoppelt werden, so dass insgesamt vorteilhaft ein große Streifenbreite bei einem gleichzeitig großem Messbereich der Bewegtzielgeschwindigkeit erzielt werden kann.

In einer besonders speziellen Ausführungsform kann die Antennenkonfiguration für einen Betrieb im Ka-Band bei 35,5 GHz ausgelegt sein, können die Subaperturen jeweils eine Länge L von 2 m aufweisen und kann der Versatz zwischen den beiden Linearantennen 0,5 m betragen.

Die Antennenkonfiguration kann auch genau eine aus siebzehn in Flugrichtung hintereinander angeordneten Subaperturen gebildete Linearantenne aufweisen, wobei jeweils vier Subaperturen in einem HRWS-Modus des synthetischen Apertur Radars betrieben werden. Bei dieser Konfiguration sind im Prinzip mehrere Linearantennen zu einer langen Linearantenne zusammengefasst, was sich insbesondere bei ausreichend kleinen Subaperturen verschiedender Teilantennen anbietet, um so die Antennenkonfiguration weniger aufwendig zu gestalten.

Die Bildaufnahme-Mittel können eine kohärente Additionseinheit aufweisen, die ausgebildet ist, mehrere durch die SAR/HRWS-Prozessierung erzeugte single look complex SAR-Bilder kohärent zu summieren, um ein einziges SAR-Bild mit maximal möglicher Empfindlichkeit zu erzeugen.

Die Bewegtzielerkennungs-Mittel können ferner einen Frequenzfilter zum Zerlegen der gesondert aufgezeichneten Empfangssignale der einzelnen Subaperturen in unabhängige Datensätze für unabhängige Schätzungen von Bewegtzielgeschwindigkeiten aufweisen.

Die Bewegtzielerkennungs-Mittel können zur Filterung für jede Linearantenne jeweils M digitale Optimalfilter zum Trennen von M Ästen eines gefalteten Bewegtzielsignals im Frequenz-Zeit-Kopplungsdiagramm aufweisen. Für jede Dopplerfrequenz kann durch ein dafür vorgesehenes Optimalfilter jeder mehrdeutige Ast einer Bewegtzielspur unterdrückt werden und der eindeutige Ast der Bewegtzielspur ermittelt werden.

Die Bewegtzielerkennungs-Mittel können zur Korrelation und Fokussierung auf ein Bewegtziel für jede Linearantenne jeweils ein Korrelationsfilter aufweisen. Jedes Korrelationsfilter kann hierbei derart konfiguriert sein, dass es zu einem gesuchten Bewegtzielsignal passt.

Die Bewegtzielerkennungs-Mittel können ferner Mittel zur Along-Track Interferometry-Prozessierung aufweisen, die dazu ausgebildet sind, die durch die Korrelation erzeugte und aus den Linearantennen hervorgegangene Bildsignalwerte miteinander konjugiert zu multiplizieren und als Ausgabedaten Phaseninformationen zu erzeugen, die zum Schätzen der Geschwindigkeit eines Bewegtziels vorgesehen sind.

Das synthetisches Apertur Radar kann ferner derart ausgebildet sein, dass Sendesignale mit einer Sendeapertur mit unterschiedlichen Pulswiederholraten, insbesondere mit mindestens zwei unterschiedlichen Pulswiederholraten, die insbesondere von Flugbahnabschnitt zu Flugbahnabschnitt innerhalb der vollständigen Integrationszeit des synthetischen Apertur Radars variiert werden, ausgesendet werden. Hierdurch kann ein Bewegtziel, dass bei einer Pulswiederholrate durch ein Blindband verdeckt ist, bei einer anderen Pulswiederholrate erkannt werden. Durch den Einsatz verschiedener Pulswiederholraten kann also die Genauigkeit der Detektion eines Bewegtziels verbessert werden.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in

Fig.1 die prinzipielle Geometrie eines GMTI-SAR-Instrumentes, mit der Flugbahn des Instrumentes, einem Bewegtziel am Boden und einem Punktziel am Boden;

Fig. 2 ein Diagramm zur Frequenz-Richtungs-Kopplung;

Fig. 3 ein Beispiel für ein konventionelles GMTI-SAR Antennensystem;

Fig. 4 Frequenz-Zeit-Kopplungsdiagramm für ein Subaperturenpaar des GMTI-SAR Antennensystems nach Fig. 3;

Fig. 5 Faltungsvorgänge bei niedriger Pulswiederholrate (links langsames, recht schnelles Bewegtziel);

Fig. 6 ein Beispiel A) für ein modifiziertes, bekanntes GMTI-SAR Antennensystem;

Fig. 7 ein Beispiel C) für ein modifiziertes, bekanntes GMTI-SAR Antennensystem;

Fig. 8 die Frequenz-Zeit Kopplung bei einem HRWS-SAR;

Fig. 9 Frequenz-Zeit Kopplung bei Szenen mit Bewegtzielen und erniedrigter Pulswiederholfrequenz;

Fig. 10 eine Strahlformung im Frequenzbereich mit Digitalfilterung gemäß einem Ausführungsbeispiel der Erfindung;

Fig. 11 ein Ausführungsbeispiel einer erfindungsgemäßen zweistöckigen Antennenanordnung;

Fig. 12 ein Blockschaltbild von Bildaufnahme-Mitteln mit SAR Prozessierung gemäß einem Ausführungsbeispiel der Erfindung;

Fig. 13 ein Blockschaltbild von Bewegtzielerkennungs-Mitteln mit Bewegtzielprozessierung gemäß einem Ausführungsbeispiel der Erfindung;

Fig. 14 ein erstes Ausführungsbeispiel einer erfindungsgemäßen Antennenkonfiguration; und

Fig. 15 ein zweites Ausführungsbeispiel einer erfindungsgemäßen Antennenkonfiguration.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

Der Erfindung liegt eine Antennenkonfiguration zugrunde, welche jeden Ast der Bewegtzielspur von dessen anderen Ästen ebenso wie von den verschiedenen Ästen der Hintergrundspur trennen kann. Dazu ist eine hinreichende Zahl von Subaperturen hintereinander anzuordnen wie beim konventionellen GMTI-SAR. Jedes empfangene Signal einer Subapertur wird separat aufgezeichnet und zur Prozessierung am Boden bereitgestellt.

Es wird für jede Dopplerfrequenz und jeden mehrdeutigen Ast des Bewegtzielsignals ein Digitalfilter berechnet, welches nach der zugehörigen Filterung der Subapertursignale (d.h. der Kombination der Subaperturstrahlen zum geformten Gesamtstrahl) nur diesen Ast übriglässt und alle unerwünschten Signale bei dieser Frequenz unterdrückt.

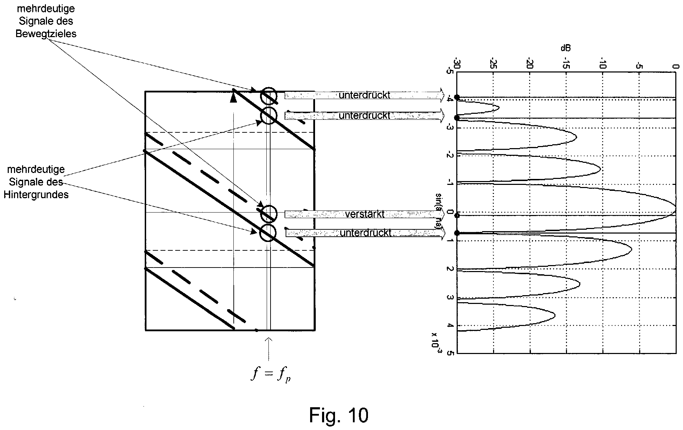

In Fig. 10 ist ein Beispiel einer Strahlformung im Frequenzbereich mit Digitalfilterung dargestellt. Als Digitalfilter kann ein Optimalfilter gewählt werden, unter Einbeziehung der Rauschleistung in den Signalen. Je mehr Subaperturen der Länge $L$ verwendet werden, desto besser gelingt die Unterdrückung der unerwünschten Signale ohne Verluste beim erwünschten Signal und desto schmaler wird zugleich das Blindgeschwindigkeitsband.

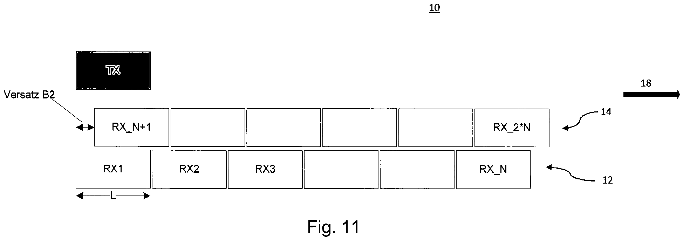

Die erfindungsgemäße Antennenkonfiguration kann aus zwei solchen linearen Anordnungen von N Subaperturen bestehen, die übereinander angeordnet und in Flugrichtung beliebig versetzt sind, wie es anhand des Ausführungsbeispiels einer erfindungsgemäßen zweistöckigen Antennenanordnung bzw. -konfiguration 10 in Fig. 11 gezeigt ist. Die Anordnung 10 weist neben einer Sendeapertur TX zwei Linearantennen 12 und 14 auf, die jeweils mehrere in Flugrichtung 18 des SAR-Instruments hintereinander bzw. in Reihe angeordnete Subparturen RX1-RX_N bzw. RX_N+1-RX_2*N zum Empfangen von reflektierten, von der Sendeapertur ausgesandten Signalen aufweisen. Die beiden so gebildeten Linearantennen 12 und 14 sind in Flugrichtung um einen Versatz B2 versetzt angeordnet. Dieser Versatz B2 erlaubt die Einstellung eines eindeutigen Geschwindigkeitsmessbereichs des Bewegtziels, beliebig und unabhängig von der Subaperturlänge $L$. Wenn diese schon ausreichend klein ist, können beide Teilantennen zu einer einzigen, um eine oder mehrere Subaperturen längere Antennenanordnung zusammengefasst werden.

Wenn dieser Geschwindigkeitsmessbereich groß und die PRF klein ist, kann die Faltung des Bewegtzielsignals mehrfach um das Frequenzband umgelaufen sein; bei jeder Geschwindigkeit, bei der die Bewegtzielspur mit der schwarzen statischen Spur zusammenfällt, tut sich eine sog. Blindgeschwindigkeit auf.

Nach der Erfindung kann nun erstens vorgesehen sein, die Blindbänder durch Einsatz einer ausreichenden Anzahl N von Subaperturen so klein wie gewünscht zu machen. Zweitens kann vorgesehen sein, mindestens zwei Looks in Azimut mit unterschiedlicher PRF aufzunehmen.

Da die Blindgeschwindigkeiten ein und desselben Bewegtziels von der PRF abhängen, mit der dieses aufgenommen wird, wird das Ziel, wenn es bei einem Look durch ein Blindband verdeckt wird, im nächsten Look sichtbar sein. Dazu muss die PRF nur geeignet verändert werden.

Bei einem Weltraum-SAR mit hoher Azimutauflösung ist die Integrationszeit des Radars in der Regel deutlich länger als die Kohärenzzeit des Echos des Bewegtziels; folglich sind zwei Looks und mehr möglich. Die Variation der PRF wird für die SAR-Bilderzeugung z.B. durch verlustfreie Interpolation der Rohdaten ausgeglichen.

Die erfindungsgemäße Antennenkonfiguration liefert SAR Rohdaten, die sowohl für die Bewegtzielerkennung (Bewegtzielprozessierung) als auch für die statische SAR Bildauswertung (SAR- bzw. Bildaufnahme-Prozessierung) verwendet werden können. Dazu wird eine geeignete duale Prozessierung vorgeschlagen. Es seien M Subaperturen für die SAR Bilderzeugung bei der gewünschten PRF erforderlich, und es gebe $N = 2 \cdot n \cdot M$ Subaperturen auf beiden Ebenen des Antennensystems. Der Faktor 2 ist grundsätzlich wegen des Vorhandenseins der zwei Spuren im Frequenz-Zeit-Kopplungsdiagramm erforderlich; der Faktor $n$ ist hinreichend groß zu wählen, dass eine geforderte Blindbandbreite erreichen wird.

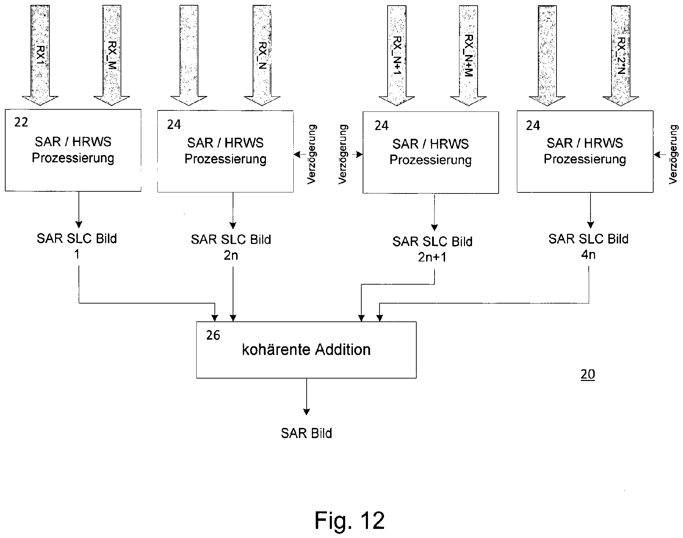

Die SAR Prozessierung findet für je $M$ Subaperturen zunächst unabhängig statt. In Fig. 12 ist ein Blockschaltbild von Bildaufnahme-Mitteln 20 mit SAR Prozessierung gemäß einem Ausführungsbeispiel der Erfindung mit $M = 2$, $n = 1$ dargestellt. Die für jede Subapertur separat aufgezeichneten $N$ Empfangssignale RX1-RX_N (erste Linearantenne 12) und $N$ Empfangssignale RX_N+1-RX_2*N (zweite Linearantenne 14) werden paarweise SAR/HRWS-Prozessierungseinheiten 22 bzw. 24 (mit einstellbarer Verzögerung) zugeführt. Jede der Einheiten 22 bzw. 24 erzeugt jeweils aus den zugeführten Empfangssignalen der Subaperturenpaare ein SLC (single-look complex) SAR Bild.

Die sich ergebenden $4 \cdot n$ SLC SAR Bilder stellen jeweils einen sog. Look dar und können wie bekannt weiterverarbeitet werden. Soll ein einziges Bild mit maximaler Empfindlichkeit erstellt werden, werden die $4n$ Looks kohärent von einer entsprechenden Additioneinheit 26 summiert. Die Prozessierung der jeweils in Flugrichtung verschobenen Subaperturpaare sollte zwecks Koregistrierung auf der Zeitachse verschoben werden, um den jeweiligen Verzögerungswert der Subaperturgruppe. Dies kann durch Eingabe eines entsprechend gewählten Verzögerungswertes bei den Einheiten 24 eingestellt werden.

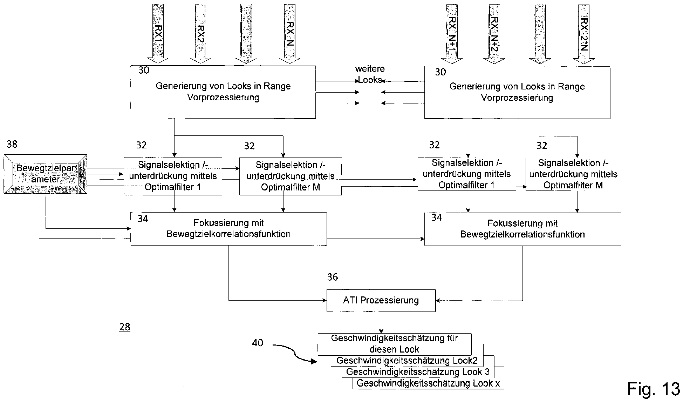

Die Bewegtzielprozessierung findet zunächst für die beiden Antennenebenen unabhängig statt. In Fig. 13 ist ein Blockschaltbild von Bewegtziel-Prozessierungsmitteln 28 mit Bewegtzielerkennung gemäß einem Ausführungsbeispiel der Erfindung gezeigt. Die 2*$N$ Rohdaten, d.h. die für jede Subapertur separat aufgezeichneten 2*$N$ Empfangssignale RX1-RX_N der ersten Linearantenne 12 und die separat aufgezeichneten Empfangssignale RX_N+1-RX_2*N der zweiten Linearantenne 14 werden jeweils Range-Vorprozessierungsmitteln 30 zum Erzeugen von "Looks in Range" zugeführt. Diese Vorprozessierung ist optional. Bei der Vorprozessierung werden die Rohdaten mittels eines Frequenzfilters in Entfernung in unabhängige Datensätze ("Looks") zerlegt, die später zu unabhängigen Schätzungen für die Bewegtzielgeschwindigkeit führen. Eine Mittelung dieser unabhängigen Schätzwerte führt zu einer verbesserten Genauigkeit. Die aus der Look-Bildung folgende Reduktion der Radarbandbreite bietet sich in den Fällen an, wo die SAR Bilder eine hohe Auflösung haben sollen, das Instrument also viel Bandbreite besitzt. Dagegen erfordert die Bewegtzielerkennung meist nur eine moderate Auflösung.

Die Range- Vorprozessierungsmittel 30 transformieren zudem die für jede Subapertur separat aufgezeichneten Empfangssignale RX1-RX_N der ersten Linearantenne 12 und die separat aufgezeichneten Empfangssignale RX_N+1-RX_2*N der zweiten Linearantenne 14 in den Aziumutfrequenzbereich.

Nach Transformation der 2*$N$ Empfangssignale in den Azimutfrequenzbereich werden die $N$ Empfangssignale bzw. Kanäle jeder Linearantenne 12 und 14 jeweils $M$ verschiedenen digitalen Optimalfiltern 32 unterworfen, um für die $N$ Empfangssignale jeder Linearantenne 12 und 14 die $M$ Äste des gefalteten Bewegtzielsignals zu trennen. Durch die Trennung der $M$ Äste des gefalteten Bewegtzielsignals mittels Filterung durch die digitalen Optimalfilter 32 wird eine Signalselektion oder -Unterdrückung durchgeführt, die über Bewegzielparameter 38 eingestellt werden kann,

Die getrennten $M$ Äste werden anschließend mit einem Korrelationsfilter 34 fokussiert, der zum gesuchten Bewegtzielsignal passt. Der Korrelationsfilter 34 kann hierzu ebenfalls über die Bewegzielparameter 38 eingestellt werden.

Schließlich werden die durch die Korrelationsfilter 34 erzeugten Bildsignalwerte, die aus den beiden Teilantennen 12 und 14 hervorgegangen sind, mittels ATI (Along-Track Interferometry)-Prozessierungsmitteln 36 im üblichen ATI-Modus miteinander konjugiert multipliziert , um zur gewünschten Phaseninformation und somit Radialgeschwindigkeitsmessung zu gelangen. Die ATI-Prozessierungsmittel 36 geben schließlich als Ausgabedaten Geschwindigkeitsschätzungen eines Bewegtziels für die verschiedenen Looks 40 aus.

Die in den Blockschaltbildern der Fig. 12 und 13 dargestellten Mittel können in Hardware beispielsweise in Form von speziellen Schaltungen, insbesondere ASICs (Application Specific Integrated Circuits), FPGAs (Field Programmable Gate Arrays), in Software beispielsweise ausgeführt von einem leistungsfähigen Standard-Mikroprozessor und/oder digitalen Signalprozessor (DSP) oder auch gemischt mit spezieller Hardware wie ASICs oder FPGAs und Software beispielsweise ausgeführt von einem Standard-DSP implementiert sein. Insbesondere bei einer Prozessierung am Boden und einer fliegenden Plattform mit einer Antennenkonfiguration wie beispielsweise in Fig. 11 gezeigt, kann eine Implementierung der Mittel beispielsweise durch einen herkömmlichen Computer erfolgen, der eine Software zum Implementieren der hierin beschriebenen Prozessierung konfiguriert ist und durch spezielle Hardware wie entsprechend leistungsfähige digitale Signalverarbeitungsschaltungen erweitert sein kann. Die fliegende Plattform mit der Antennenkonfiguration gemäß der Erfindung kann Mittel aufweisen, um die Empfangssignale der Subaperturen gesondert aufzuzeichnen und sie der weiteren Prozessierung zur Verfügung zu stellen, beispielsweise mittels einer Übertragung zu einer Bodenstation, welche die Prozessierung durchführt. Eine Teilprozessierung kann auch bereits auf der fliegenden Plattform stattfinden.

Im Folgenden wird nun ein erstes, spezielles Ausführungsbeispiel der erfindungsgemäßen Antennenkonfiguration beschrieben (Ausführungsbeispiel 1 in der Tabelle unten).

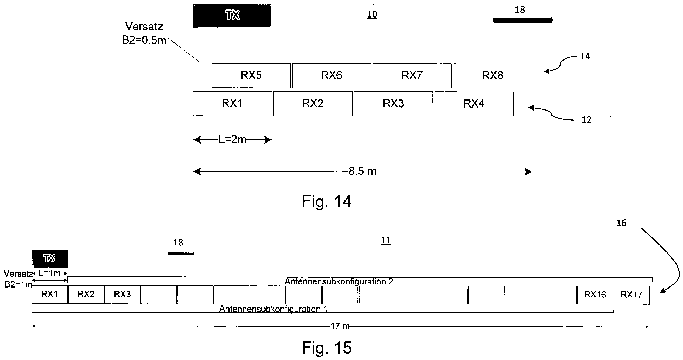

Die im Ka-Band (35.5 GHz) betriebene und in Fig. 14 gezeigte Antennenkonfiguration 10 weist zwei Linearantennen 12, 14 mit je 4 in Flugrichtung 18 hintereinander angeordneten Subaperturen RX1-RX4 bzw. RX5-RX8 der Länge $L = 2m$ auf. Die Azimutauflösung des SAR Bildes beträgt 1 m. Um die geringe Streifenbreite, die bei dieser hohen Auflösung konventionell nur möglich ist, zu verbessern (verdoppeln), werden je zwei Subaperturen im HRWS-Modus betrieben ($M = 2$, $n = 1$). Die zweite Ebene von 4 Subaperturen ist um B2=0.5 m in Flugrichtung versetzt. Es werden näherungsweise die Performancewerte in Tabelle 1 erreicht. Der Vorteil der Konfiguration 10 besteht in einer großen Streifenbreite bei gleichzeitigem sehr großem Bewegtzielgeschwindigkeitsmessbereich.

Tabelle 1 (alle Bewegtzielgeschwindigkeiten in Schrägentfernung angegeben)

| Parameter | Ausführungsbeispiel 1 | Ausführungsbeispiel 2 |
|---|---|---|
| SAR Azimutauflösung | 1 m | 0.5 m |
| PRF | 3.8 kHz | 1.9 kHz |
| maximale Streifenbreite bei 45° Einfallswinkel | 45 km | 90 km |
| eindeutiger Geschwindigkeitsbereich | $\pm 64$ m/s | $\pm 32$ m/s |
| typische Mindestgeschwindigkeit (max. -5dB Signalverlust) | 2 m/s | 1 m/s |
| PRF Blindgeschwindigkeiten | $n \times 15.8 m/s$ | $n \times 8 m/s$ |
| Breite eines PRF-Blindbandes in % der Blindgeschwindigkeit | 25% | 25% |

Nachfolgend wird ein zweites, spezielles Ausführungsbeispiel der erfindungsgemäßen Antennenkonfiguration beschrieben (Ausführungsbeispiel 2 in der Tabelle oben).

In diesem Beispiel soll ein kleinerer eindeutiger Geschwindigkeitsmessbereich des Bewegtziels genügen. Deshalb darf der Versatz zwischen den beiden linearen Antennenkonfigurationen 1 m groß sein. Zugleich soll die Subaperturlänge $L=1m$ betragen, um zu einer hohen Azimutauflösung des SAR Instrumentes zu kommen. Die obere Antennenkonfiguration kann jetzt in die untere integriert werden, sodass eine einzige lineare Antenne, in dieser Auslegung mit 17 Subaperturen entsteht, wie sie in Fig. 15 gezeigt ist. Es werden je 4 Subaperturen in HRWS-Mode betrieben, um trotz kleiner Azimutauflösung zu großen Streifenbreiten zu kommen. Die Vorteile dieser Architektur sind: eine der Antennengesamtlänge entsprechende niedrige Minimalgeschwindigkeit, sowie große Streifenbreite bei gleichzeitigem großem Bewegtzielgeschwindigkeitsmessbereich.

Abschließend werden wesentliche Vorteile der Erfindung zusammengefasst.

Die hohe Pulswiederholrate (PRF) konventioneller GMTI-SAR Instrumente, die zur Detektion schneller Bewegtziele erforderlich ist, zwingt bisher zur Auslegung des Instruments auf schmale abzubildende Bodenstreifen. Dies ist für sich nachteilig. Sie verhindert darüber hinaus eine einzige Instrumentauslegung und einen simultanen Aufnahmemodus sowohl für GMTI-SAR als auch konventionellem bildgebendem SAR, das in der Regel für breite Streifen ausgelegt wird.

Die vorliegende Erfindung besitzt dagegen die folgenden Vorteile:

1. Die Erfindung zeigt auf, wie die PRF eines konventionellen GMTI-SAR Instruments durch Einführen zusätzlicher empfangsseitiger Subaperturen gesenkt werden kann. Jede dieser Subaperturen verfügt über eine separate Signalaufzeichnung. Damit lässt sich die aufzunehmende Streifenbreite und/ oder die Maximalgeschwindigkeit eines detektierbaren Bewegtziels erhöhen.

2. Die Erfindung zeigt auf, wie ein einziges Instrument sowohl für GMTI-SAR als auch für konventionelle SAR Funktionalität ausgelegt und operationell in einem einzigen Aufnahmemodus genutzt werden kann. Unterschieden wird erst bei der Prozessierung. Die für den GMTI-SAR Mode bei niedriger PRF erforderlichen zusätzlichen Subaperturen können im SAR-Mode genutzt werden, um die Empfindlichkeit des Instrumentes zu erhöhen.

3. Die Erfindung zeigt auf, welche Prozessierungsabläufe möglich sind, um von ein und demselben Satz von Rohdaten sowohl zu SAR Bilddaten als auch zu Bewegtzielerkennungsdaten zu gelangen.

4. Die Maximalgeschwindigkeit eines detektierbaren Bewegtziels kann unabhängig von der Länge der Subaperturen eingestellt werden.

5. Die bei niedriger Pulswiederholrate auftretenden Blindgeschwindigkeiten werden bei der Erfindung durch Variation der PRF in alternierenden Azimut-Looks verschoben. Dadurch sind Bewegtziele, die bei einem Look von einer Blindgeschwindigkeit verdeckt werden, im anderen Look sichtbar.

BEZUGSZEICHEN UND AKRONYME

| | |
|---|---|
| 10 | Antennenkonfiguration |
| 11 | Antennenkonfiguration |
| 12 | erste Reihe von Subaperturen zum Empfangen von reflektierten Signalen |
| 14 | zweite Reihe von Subaperturen zum Empfangen von reflektierten Signalen |
| 16 | einzelne Reihe von Subaperturen zum Empfangen von reflektierten Signalen |
| 18 | Flugrichtung |
| 20 | SAR-Prozessierungsmittel |
| 22 | SAR/HRWS-Prozessierungseinheit |
| 24 | SAR/HRWS-Prozessierungseinheit mit Verzögerung |
| 26 | kohärente Additionseinheit |
| 28 | Bewegtziel-Prozessierungsmittel |
| 30 | Range-Vorprozessierungsmittel |
| 32 | digitales Optimalfilter |
| 34 | Korrelationsfilter |
| 36 | ATI-Prozessierungsmittel |
| 38 | Bewegtzielparameter |
| 40 | Geschwindigkeitsschätzung eines Bewegtziels für einen bestimmten Look |
| RX1 - RX_N | N Subaperturen der ersten Reihe 12 |
| RX_N+1 - RX_2*N | N Subaperturen der zweiten Reihe 14 |
| TX | sendende Apertur |
| L | Aperturlänge in Flugrichtung 18 |
| B2 | Versatz zwischen den zwei Reihen 12 und 14 in Flugrichtung 18 |
| ATI | Along-Track Interferometry/Flugrichtungs-Interferometrie |
| GMTI | Ground Moving Target Indicator/ Indikator für bewegliches Bodenziel |
| HRWS | High Resolution Wide Swath/hochauflösend-breiter Streifen |
| MDV | Minimum Detectable Velocity/minimale detektierbare Geschwindigkeit |
| PRF | Pulse Reptition Frequency/Pulswiederholrate |
| SAR | Synthetisches Apertur Radar |
| SLC | single look complex/komplexe Einzelaufnahme |

**Patentansprüche**

1. Synthetisches Apertur Radar, SAR, zur gleichzeitigen Bildaufnahme und Bewegtzielerkennung mit einer Antennenkonfiguration (10), die mindestens eine aus mehreren in Flugrichtung (18) hintereinander angeordneten Subaperturen (RX_N+1-RX_2*N, RX1-RX_N) gebildete Linearantenne (12, 14) zum Empfangen von reflektierten Signalen aufweist,
Bildaufnahme-Mitteln (20), die zum Erzeugen von SAR-Bildern durch eine SAR/High Resolution Wide Swath, HRWS,-Prozessierung (22, 24) der gesondert aufgezeichneten Empfangssignale der einzelnen Subaperturen (RX_N+1-RX_2*N, RX1-RX_N) ausgebildet sind, und Bewegtzielerkennungs-Mitteln (28), die zum Schätzen der Geschwindigkeit eines Bewegtziels durch Transformation (30) der gesondert aufgezeichneten Empfangssignale der einzelnen Subaperturen (RX_N+1-RX_2*N, RX1-RX_N) in den Azimutfrequenzbereich, Filterung (32) der transformierten Empfangssignale zur Signalselektion und Korrelation (34) der selektierten Signale zur Fokussierung auf ein Bewegtziel ausgebildet sind,
wobei das SAR ferner ausgebildet ist, Sendesignale mit einer Sendeapertur (TX) mit unterschiedlichen Pulswiederholraten auszusenden,
**dadurch gekennzeichnet, daß**
mindestens zwei Looks in Azimut mit unterschiedlicher Pulswiederholrate aufgenommen werden.

2. Synthetisches Apertur Radar nach Anspruch 1,

**dadurch gekennzeichnet, dass**
mehrere Linearantennen (12, 14) einer Antennenkonfiguration (10) in Flugrichtung (18) zueinander versetzt (B2) angeordnet sind.

3. Synthetisches Apertur Radar nach Anspruch 2,
   **dadurch gekennzeichnet, dass**
   die Antennenkonfiguration (10) genau zwei aus jeweils vier in Flugrichtung (18) hintereinander angeordneten Subaperturen (RX1-RX4, RX5-RX8) gebildete Linearantennen (12, 14) aufweist, die in Flugrichtung (18) zueinander versetzt (B2) angeordnet sind, wobei jeweils zwei Subaperturen jeder Linearantenne in einem HRWS-Modus des synthetischen Apertur Radars betrieben werden.

4. Synthetisches Apertur Radar nach Anspruch 3,
   **dadurch gekennzeichnet, dass**
   die Antennenkonfiguration (10) für einen Betrieb im Ka-Band bei 35,5 GHz ausgelegt ist, die Subaperturen jeweils eine Länge L von 2 m aufweisen und der Versatz (B2) zwischen den beiden Linearantennen (12, 14) 0,5 m beträgt.

5. Synthetisches Apertur Radar nach Anspruch 1 oder 2,
   **dadurch gekennzeichnet, dass**
   die Antennenkonfiguration (11) genau eine aus siebzehn in Flugrichtung (18) hintereinander angeordneten Subaperturen (RX1-RX17) gebildete Linearantenne (16) aufweist, wobei jeweils vier Subaperturen in einem HRWS-Modus des synthetischen Apertur Radars betrieben werden.

6. Synthetisches Apertur Radar nach einem der Ansprüche 1 bis 5,
   **dadurch gekennzeichnet, dass**
   die Bildaufnahme-Mittel (20) eine kohärente Additionseinheit (26) aufweisen, die ausgebildet ist, mehrere durch die SAR/HRWS-Prozessierung (22, 24) erzeugte single look complex SAR-Bilder kohärent zu summieren, um ein einziges SAR-Bild zu erzeugen.

7. Synthetisches Apertur Radar nach einem der Ansprüche 1 bis 6,
   **dadurch gekennzeichnet, dass**
   die Bewegtzielerkennungs-Mittel (28) ferner einen Frequenzfilter (30) zum Zerlegen der gesondert aufgezeichneten Empfangssignale der einzelnen Subaperturen (RX_N+1-RX_2*N, RX1-RX_N) in unabhängige Datensätze für unabhängige Schätzungen von Bewegtzielgeschwindigkeiten aufweisen.

8. Synthetisches Apertur Radar nach einem der Ansprüche 1 bis 7,
   **dadurch gekennzeichnet, dass**
   die Bewegtzielerkennungs-Mittel (28) zur Filterung für jede Linearantenne (12, 14) jeweils M digitale Optimalfilter (32) zum Trennen von M Ästen eines gefalteten Bewegtzielsignals im Frequenz-Zeit-Kopplungsdiagramm aufweisen.

9. Synthetisches Apertur Radar nach Anspruch 8,
   **dadurch gekennzeichnet, dass**
   die Bewegtzielerkennungs-Mittel (28) zur Korrelation und Fokussierung auf ein Bewegtziel für jede Linearantenne (12, 14) jeweils ein Korrelationsfilter (34) aufweisen.

10. Synthetisches Apertur Radar nach einem der Ansprüche 1 bis 9,
    **dadurch gekennzeichnet, dass**
    die Bewegtzielerkennungs-Mittel (28) ferner Mittel zur Along-Track Interferometry-Prozessierung (36) aufweisen, die dazu ausgebildet sind, durch die Korrelation (34) erzeugte und aus den Linearantennen (12, 14) hervorgegangene Bildsignalwerte miteinander konjugiert zu multiplizieren und als Ausgabedaten Phaseninformationen zu erzeugen, die zum Schätzen der Geschwindigkeit eines Bewegtziels vorgesehen sind.

11. Synthetisches Apertur Radar nach einem der Ansprüche 1 bis 10,
    **dadurch gekennzeichnet, dass**
    es ausgebildet ist, Sendesignale mit einer Sendeapertur (TX) mit mindestens zwei unterschiedlichen Pulswiederholraten, die insbesondere von Flugbahnabschnitt zu Flugbahnabschnitt innerhalb der vollständigen Integrationszeit des synthetischen Apertur Radars variiert werden, auszusenden.

**Claims**

1. A synthetic aperture radar, SAR, for simultaneous imaging and moving target indication, having

an antenna configuration (10) which comprises at least one linear antenna (12, 14) formed from a plurality of subapertures (RX_N+1-RX_2*N, RX1-RX_N) arranged in a row in flight direction (18) for receiving reflected signals,
imaging means (20), embodied for generating SAR images by means of SAR/High Resolution Wide Swath, HRWS processing (22, 24) of the separately recorded receiving signals from the individual subapertures (RX_N+1-RX_2*N, RX1-RX_N), and
moving target indication means (28), embodied for estimating the velocity of a moving target by transforming (30) the separately recorded receiving signals from the individual subapertures (RX_N+1-RX_2*N, RX1-RX_N) to the azimuthal frequency range, filtering (32) the transformed receiving signals for signal selection, and correlating (34) the selected signals for focusing on a moving target,
wherein the SAR further is embodied for transmitting transmitting signals with a transmitting aperture (TX) at different pulse repetition frequencies,

**characterized in that**
at least two looks are recorded in azimuth at a different pulse repetition frequency.

2. The synthetic aperture radar according to claim 1,
**characterized in that** a plurality of linear antennas (12, 14) in an antenna configuration (10) are arranged offset from one another (82) in the flight direction (18).

3. The synthetic aperture radar according to claim 2,
**characterized in that** the antenna configuration (10) comprises precisely two linear antennas (12, 14), each formed from four subapertures (RX1-RX4, RX5-RX8) arranged in a row in the flight direction (18), which antennas are arranged offset from one another (82) in the flight direction (18), wherein in each case two subapertures of each linear antenna are operated in an HRWS mode of the synthetic aperture radar.

4. The synthetic aperture radar according to claim 3,
**characterized in that** the antenna configuration (10) is designed to operate in the Ka band at 35.5 GHz, each of the subapertures has a length L of 2 m, and the offset (82) between the two linear antennas (12, 14) is 0.5 m.

5. The synthetic aperture radar according to claim 1 or 2,
**characterized in that** the antenna configuration (11) has precisely one linear antenna (16) formed from seventeen subapertures (RX1-RX17) arranged in a row in the flight direction (18), wherein in each case, four subapertures are operated in an HRWS mode of the synthetic aperture radar.

6. The synthetic aperture radar according to any one of claims 1 to 5,
**characterized in that** the imaging means (20) have a coherent addition unit (26), embodied for coherently combining a plurality of single look complex SAR images generated by the SAR/HRWS processing (22, 24) in order to generate a single SAR image.

7. The synthetic aperture radar according to any one of claims 1 to 6,
**characterized in that** the moving target indication means (28) further has a frequency filter (30) for separating the separately recorded receiving signals from the individual subapertures (RX_N+1-RX_2*N, RX1-RX_N) into independent data sets for independent estimates of moving target velocities.

8. The synthetic aperture radar according to any one of claims 1 to 7,
**characterized in that** for filtering, the moving target indication means (28) has M digital optimal filters (32) for each linear antenna (12, 14) for separating M branches of a folded moving target signal in the frequency/time coupling diagram.

9. The synthetic aperture radar according to claim 8,
**characterized in that** the moving target indication means (28) has a correlation filter (34) for each linear antenna (12, 14) for the purpose of correlation and focusing on a moving target.

**10.** The synthetic aperture radar according to any one of claims 1 to 9,
**characterized in that** the moving target indication means (28) further has means for along-track interferometric processing (36), embodied for the conjugate multiplication of image signal values generated by correlation (34) and originating from the linear antennas (12, 14), and for generating phase information as output data that are provided for estimating the velocity of a moving target.

**11.** The synthetic aperture radar according to any one of claims 1 to 10,
**characterized in that** it is embodied for transmitting transmitting signals with a transmitting aperture (TX) at at least two different pulse repetition frequencies, which are varied particularly from trajectory segment to trajectory segment over the entire integration period of the synthetic aperture radar.

**Revendications**

**1.** Radar à synthèse d'ouverture SAR (Synthetic Aperture Radar) pour la prise de vue et la détection de cible mobile simultanées, comprenant
une configuration d'antenne (10) qui présente au moins une antenne linéaire (12, 14) formée par plusieurs sous-ouvertures (RX_N+1-RX_2*N, RX1-RX_N) disposées les unes derrière les autres dans la direction de vol et servant à recevoir des signaux réfléchis,
des moyens de prise de vue (20) qui sont conçus pour produire des images SAR par traitement (22, 24) en mode large fauchée haute résolution SAR/HWRS (High Resolution Wide Swath) des signaux de réception des différentes sous-ouvertures (RX_N+1-RX_2*N, RX1-RX_N) enregistrés séparément, et
des moyens de détection de cible mobile (28) qui sont conçus pour estimer la vitesse d'une cible mobile par transformation (30) dans la plage de fréquence azimutale des signaux de réception des différentes sous-ouvertures (RX_N+1-RX_2*N, RX1-RX_N) enregistrés séparément, par filtrage (32) des signaux de réception transformés en vue de la sélection de signaux et par corrélation (34) des signaux sélectionnés en vue de la focalisation sur une cible mobile,
le SAR étant en outre conçu pour émettre des signaux d'émission à l'aide d'une ouverture d'émission (TX) avec des taux de répétition des impulsions différents, **caractérisé en ce que**
au moins deux vues sont prises en azimut avec un taux de répétition des impulsions différent.

**2.** Radar à synthèse d'ouverture selon la revendication 1,
**caractérisé en ce que**
plusieurs antennes linéaires (12, 14) d'une configuration d'antenne (10) sont agencées décalées (B2) les unes par rapport aux autres dans la direction de vol (18).

**3.** Radar à synthèse d'ouverture selon la revendication 2,
**caractérisé en ce que**
la configuration d'antenne (10) présente exactement deux antennes linéaires qui sont respectivement formées par quatre sous-ouvertures (RX1-RX4, RX5-RX8) disposées les unes derrière les autres dans la direction de vol (18) et qui sont agencées décalées (B2) l'une par rapport à l'autre dans la direction de vol, deux sous-ouvertures de chaque antenne linéaire fonctionnant dans un mode HRWS du radar à synthèse d'ouverture.

**4.** Radar à synthèse d'ouverture selon la revendication 3,
**caractérisé en ce que**
la configuration d'antenne (10) est conçue pour fonctionner en bande Ka à 35,5 GHz, que les sous-ouvertures présentent chacune une longueur L de 2 m et que le décalage (B2) entre les deux antennes linéaires (12, 14) est de 0,5 m.

**5.** Radar à synthèse d'ouverture selon la revendication 1 ou 2,
**caractérisé en ce que**
la configuration d'antenne (11) présente exactement une antenne linéaire (16) qui est formée par dix-sept sous-ouvertures (RX1-RX17) disposées les unes derrière les autres dans la direction de vol (18), ces sous-ouvertures fonctionnant par groupe de quatre dans un mode HRWS du radar à synthèse d'ouverture.

**6.** Radar à synthèse d'ouverture selon l'une des revendications 1 à 5,
**caractérisé en ce que**
les moyens de prise de vue (20) présentent une unité d'addition (26) cohérente conçue pour additionner de manière cohérente plusieurs images SAR mono-vue complexe générées par traitement SAR/HRWS (22, 24) afin de produire une seule image SAR.

7. Radar à synthèse d'ouverture selon l'une des revendications 1 à 6,
   **caractérisé en ce que**
   les moyens de détection de cible mobile (28) présentent en outre, pour effectuer des estimations indépendantes des vitesses de la cible mobile, un filtre de fréquence (30) servant à diviser en des ensembles de données indépendantes les signaux de réception des différentes sous-ouvertures (RX_N+1-RX_2*N, RX1-RX_N) enregistrés séparément.

8. Radar à synthèse d'ouverture selon l'une des revendications 1 à 7,
   **caractérisé en ce que**
   les moyens de détection de cible mobile (28) présentent respectivement, pour le filtrage et pour chaque antenne linéaire (12, 14), des M filtres optimaux numériques (32) pour la séparation de M branches d'un signal de cible mobile de convolution dans le diagramme de couplage temps-fréquence.

9. Radar à synthèse d'ouverture selon la revendication 8,
   **caractérisé en ce que**
   les moyens de détection de cible mobile (28) présentent respectivement pour chaque antenne (12, 14) un filtre de corrélation (34) pour la corrélation et la focalisation sur une cible mobile.

10. Radar à synthèse d'ouverture selon l'une des revendications 1 à 9,
    **caractérisé en ce que**
    les moyens de détection de cible mobile (28) présentent en outre des moyens de traitement par interférométrie longitudinale (36) qui sont conçus pour multiplier de manière conjuguée des valeurs de signal d'image produites par corrélation (34) et des valeurs de signal d'image issues des antennes linéaires (12, 14) ainsi que pour générer des données de phase sous forme de données de sortie destinées à l'estimation de la vitesse d'une cible mobile.

11. Radar à synthèse d'ouverture selon l'une des revendications 1 à 10,
    **caractérisé en ce que**
    ce radar est conçu pour émettre des signaux d'émission à l'aide d'une ouverture d'émission (TX) avec au moins deux taux de répétition des impulsions différents, lesquels taux varient plus particulièrement d'un segment de trajectoire de vol à l'autre pendant toute la durée d'intégration du radar à synthèse d'ouverture.

TX Phasenzentrum

RX Phasenzentrum 1

RX Phasenzentrum 2

Schrägentfernung R

α

ξ

Statisches
Punktziel am Ort
ξ < 0 mit
gleicher DF wie
Bewegtziel
(Clutter)

Bewegtziel am
Ort ξ = 0 mit
radialer
Geschwindigkeit
u (Moving
Target)

Fig. 1

EP 2 725 382 B1

Fig. 2

Fig. 3

$$\sin\alpha = \frac{\lambda}{2L}$$

Blindgeschwindigkeitsband

$$f = \frac{PRF}{2}$$

Kombiniertes
Antennenpattern für f=f$_p$

$$f = \frac{-PRF}{2}$$

$$f = f_p$$

dB

Fig. 4

Fig. 5

Fig. 6

Fig. 7

$$\sin \alpha = \frac{\lambda}{2L}$$

$$f = \frac{PRF_0}{4}$$

$$f = \frac{PRF_0}{2}$$

mehrdeutige Signale

## Fig. 8

mehrdeutige Signale des
Bewegtzieles

$$\sin \alpha = \frac{\lambda}{2L}$$

$$f = \frac{PRF_0}{4}$$

$$f = f_p$$

mehrdeutige Signale des
Hintergrundes

## Fig. 9

Fig. 10

10

TX

18

Versatz B2

| RX_N+1 | | | | | RX_2*N | 14 |

| RX1 | RX2 | RX3 | | | RX_N | 12 |

←—L—→

**Fig. 11**

Fig. 12

RX1 RX2 RX_N    RX_N+1 RX_N+2 RX_2*N

**30**
Generierung von Looks in Range
Vorprozessierung

weitere
Looks

**30**
Generierung von Looks in Range
Vorprozessierung

**38**
Bewegtzielparameter

**32**
Signalselektion /-
unterdrückung mittels
Optimalfilter 1

**32**
Signalselektion /-
unterdrückung mittels
Optimalfilter M

**32**
Signalselektion /-
unterdrückung mittels
Optimalfilter 1

**32**
Signalselektion /-
unterdrückung mittels
Optimalfilter M

**34**
Fokussierung mit
Bewegtzielkorrelationsfunktion

**34**
Fokussierung mit
Bewegtzielkorrelationsfunktion

**36**
ATI Prozessierung

**28**

**40**

Geschwindigkeitsschätzung für
diesen Look
Geschwindigkeitsschätzung Look2
Geschwindigkeitsschätzung Look 3
Geschwindigkeitsschätzung Look x

Fig. 13

Fig. 14

Fig. 15

**IN DER BESCHREIBUNG AUFGEFÜHRTE DOKUMENTE**

**In der Beschreibung aufgeführte Patentdokumente**

- EP 1241487 B1

**In der Beschreibung aufgeführte Nicht-Patentliteratur**

- MIMO SAR/MTI system design and signal analysis for moving target indiction. LONG SUN ET AL, RADAR (RADAR), 2011 IEEE CIE INTERNATIONAL CONFERENCE. IEEE, 24. Oktober 2011, 116-121
- **S BAUMGARTNER et al.** Digital Beamforming and Traffic Monitoring Using the new F-SAR System of DLR. *PROCEEDINGS INTERNATIONAL RADAR SYMPOSIUM,* 07. September 2007
- GMTI Performance of a High Resolution Wide Swath SAR Operation Mode. **GABELE M et al.** GEOSCIENCE AND REMOTE SENSING SYMPOSIUM, 2008. IEEE, 07. Juli 2008
- A novel spectrum reconstruction algorithm for high resolution and wide swath space-borne SAR. **XINWEI WU et al.** 2007 1ST ASIAN AND PACIFIC CONFERENCE ON SYNTHETIC APERTURE RADAR. 01. November 2007, 709-712